# EUROPEAN PATENT APPLICATION

(11) **EP 1 377 092 A1**
(43) Date of publication of application: **02.01.2004**
(21) Application number: 03396044.4
(22) Date of filing: 16.05.2003
(51) Int. Cl.: H04Q 7/32

(54) **Arranging a data transmission connection**

(30) Priority: 28.06.2002 FI 20021283
(71) Applicant: Nokia Corporation, 02150 Espoo (FI)
(72) Inventor: Simelius, Kim, 33720 Tampere (FI); Puranen, Kari, 36100 Kangasala (FI)
(74) Representative: Johansson, Folke

(57) **Abstract**

The invention relates to a method for maintaining a first data transmission connection from a terminal device (PC) to a telecommunications network, the first data transmission connection comprising a first partial connection between the terminal device (PC) and a wireless communications device (MS) and a second partial connection between the wireless communications device (MS) and the telecommunications network. In the method, said second partial connection is suspended and the first partial connection between the terminal device (PC) and the wireless communications device (MS) is set to idle mode, meaning that the connection is terminated on the physical layer but maintained on a higher layer.

## Description

This invention relates to a method and equipment that implements a method for arranging a first data transmission connection from a terminal device to a telecommunications network, in which method, at least a second data transmission connection between said terminal device and a telecommunications network is established and in which method the first data transmission connection is suspended for the duration of the second data transmission connection.

In addition to conventional circuit-switched connections, a possibility for packet-switched connections has been developed for mobile communication systems, such as the GSM mobile communication system. The so-called GPRS service (General Packet Radio Service) has been adapted to the GSM mobile communication system in order to implement a packet-switched connection. Among other applications, the GPRS service enables the use of IP (Internet Protocol) and the X.25 data transmission protocol, SMS (Short Message Service), electronic mail and WAP applications (Wireless Application Protocol). Such a packet-switched data transmission connection enables a more efficient data transmission method, especially for asynchronous communication, as the resources of the mobile communication system are not reserved for the entire duration of a packet-switched connection but only for the period required for the transmission of each packet. On the other hand, a circuit-switched connection is allocated for the entire duration of connection activity. By means of a packet-switched connection, the user of a wireless communications device is able to have an electronic mail application active all the time, for example, so that the user can immediately notice an incoming electronic mail message without reserving the mobile communications device solely for this purpose. Because a packet-switched connection allocates resources only as necessary, it can also be more economical for the user in terms of call charges compared to the use of a circuit-switched connection. This is true particularly in a situation where the amount of data to be sent and received is small, but a lot of time is spent on utilising it, as often is the case with reading electronic mail.

Three operating modes have been specified for a wireless communications device in the GPRS system: Class A, Class B and Class C. Wireless communications devices can be categorised into these classes on the basis of how they use circuit-switched and packet-switched services simultaneously. Class A wireless communications devices can use GPRS services and other GSM services simultaneously. Class B wireless communications devices can simultaneously monitor signals on the control channels of the GPRS and GSM networks, but can only use either GPRS services or GSM services at any given time. Class C wireless communications devices can monitor said signals on the control channels and use both a circuit-switched connection and a packet-switched GPRS connection, but not simultaneously.

In practice, a Class B wireless communications device is able to receive messages related to the establishment of a circuit-switched connection, even when the wireless communications device uses GPRS services and a packet data connection is active, for example. In this case, the wireless communications device can receive a message notifying about an incoming call (CS paging) but cannot operate using a circuit-switched connection and a packet-switched connection simultaneously. In a situation where the wireless communications device receives a message associated with a circuit-switched connection (paging), the packet-switched connection is set to idle mode for the duration of receiving the message and the duration of any circuit-switched connection that is established, up until the termination of the circuit-switched connection. In an ideal situation, this means that the wireless communications device may change its state between a packet-switched connection and a circuit-switched connection and, after the changeover, continue operation in the mode that was active at the time of the interruption. However, practical experience has shown that applications using packet-switched connections, such as electronic mail or the FTP application used for file transfer, will terminate during a relatively short interruption in the connection. For example, in a number of known electronic mail protocols, such as POP3 (Post Office Protocol) and IMAP4 (Internet Message Access Protocol), maintenance messages must be sent at certain intervals during the connection in order to prevent the connection from terminating. Such a feature is used, among other reasons, to keep the connection from remaining active unnecessarily. If the electronic mail server does not receive such a message within a certain period of time, the server assumes that the connection has terminated or the terminal device is no longer in operation, and terminates the connection. When using the POP3 protocol, the electronic mail connection may terminate after an interruption of approximately 10 minutes; when the IMAP4 protocol is used, this can be caused by an interruption of approximately 30 minutes. Significantly shorter timeouts may also be set for the server. After the connection has terminated, the user must re-establish the electronic mail connection and enter a user ID and password, which causes delays in electronic mail application access. In addition, the incoming mailbox may remain in an undefined state, which may require the user to download all previously downloaded messages again to the terminal device.

Thus in a situation where a packet-switched connection is active in the wireless communications device and the device receives an incoming call, the packet-switched connection is set to idle mode. A method known from the patent publication EP 1 096 813 A2 is associated with the transmission of the above-mentioned maintenance messages for a packet-switched connection between the wireless communications device and the server providing the service. The publication describes an application where the server S performs timeout control by establishing a keepalive counter or similar counter specific to each packet-switched connection and alters its value at specified intervals. If the keepalive counter reaches a preset value, for example zero, the server S concludes that the terminal device, or the application using the packet-switched connection in the terminal device is no longer in operation, and that the packet-switched connection should be terminated. The patent publication aims to resolve a problem situation where said messages cannot be transmitted from wireless communications devices and the packet-switched connection may terminate. The solution proposed in the publication is based on the idea that when a GPRS packet-switched connection is active, the terminal device sends a maintenance message associated with the GPRS connection before establishing a circuit-switched GSM connection.

The solution according to the patent publication EP 1 096 813 A2 makes it possible to avoid the termination of a packet-switched connection particularly in cases where the request to establish a circuit-switched connection arrives just before the time of sending a maintenance message to maintain the connection. In this case, the circuit-switched connection may remain active for a longer period independent of the connection establishment time, but after a certain period, the keepalive counter will reach zero in any case and the server will terminate the GPRS connection, which means that the solution according to the publication does not allow the connection to be maintained for periods longer than the time preset in the counter.

In addition to what is described above, a prior art arrangement allows the wireless communications device to be used as a so-called modem, in which case the application using the data transmission connection resides in a separate terminal device such as a laptop computer, and the mobile communication network is used as a data transmission channel for the terminal device instead of a fixed land-line telephone modem or a LAN (Local Area Network). In this arrangement, the data transmission connection between the wireless communications device and the terminal device in practical applications may be a wired or a wireless connection, such as an infrared or radio frequency link. A wireless connection between the mobile communications device and the terminal device introduces another problem to the arrangement that is the subject of the invention. Even if the mobile communications device was able to function in relation to the mobile communication network in a manner that prevents the GPRS-based connection from terminating during a circuit-switched GSM connection, the mobile communications device should also be able to maintain the wireless link between the terminal device and the mobile communications device so that the GPRS-based connection may continue without problems after the circuit-switched GSM connection has terminated. When an infrared connection is used between a terminal device and a wireless communications device, the operation of the infrared connection typically requires an unobstructed link between the devices, which may cause problems in situations where there are two different data transmission connections. To ensure reliable operation and ease of use, prior art devices have placed the transceiver unit enabling the infrared connection, the so-called IR port, in the device housing so that in the device operating position, for example when placed on a table, the direction of the IR port is essentially horizontal, away from the device housing and parallel with the table top. In this case, devices using an infrared connection can be easily placed on a table so that the IR ports face each other. This has been done in particular to ensure that the relatively direction-sensitive infrared connection is easy to implement without requiring the user to point either device in a particular direction; instead, both devices can be placed on a tabletop in static positions.

When a GPRS connection is active in such an arrangement, the wireless communications device is typically placed in the immediate vicinity of the terminal device, for example on a tabletop so that there is an unobstructed infrared link from the IR port of the wireless communications device to the IR port of the terminal device, and the user can concentrate on using the terminal device. The terminal device is further connected through the mobile communications device over a mobile communication network to another data transmission party, such as a server providing a service or another mobile communications device. A problem situation occurs in the above-mentioned prior art arrangement when the intention is to activate a circuit-switched connection to the wireless communications device while a packet-switched connection is active, for example to place a call or answer an incoming call. In this case, one of the problems is that the user typically lifts the wireless communications device from beside the terminal device on the tabletop up to a normal talking position, which may cause the infrared connection between the wireless communications device and the terminal device to terminate after a relatively short timeout period. If this happens, the data transmission connection of the application residing in the terminal device will also be terminated. After the call has terminated, the user returns the wireless communications device to its position beside the terminal device. If the terminal device is equipped with an infrared signal monitoring function, the terminal device detects the infrared signal from the wireless communications device, but since the connection has already terminated, the terminal device does not recognize the infrared identifier of the wireless communications device as being the same as before the termination of the connection. Due to this, the packet-switched connection active in the wireless communications device cannot be re-attached, as the data transmission connection of the application active in the terminal device. This not only delays the re-establishment of the packet-switched connection, but can also cause problems in certain applications that have been active at the time the connection terminated. For example, banking services and other services with high demands for information security require login and user authentication in the connection activation phase. The authentication is performed, for example, using a user lD/password pair, and upon successful authentication, the user is allowed to access the service. If the connection terminates for any reason, the user is required to log in again when establishing a new connection, delaying and hampering the use of the service. The above-mentioned reference publication describing prior art does not provide a solution to this problem in the interface between a wireless communications device and a terminal device caused by the different position of the wireless communications device when using different data transmission connections.

The object of the present invention is to provide an improvement to prior art and improve the management of data transmission connections in a wireless environment. A particular objective of the invention is to improve the simultaneous usability of data transmission connections in an environment where a data transmission connection is established from a terminal device through a wireless communications device to a wireless data communications network. The data transmission connection comprises a first partial connection between the terminal device and the wireless communications device, and a second partial connection between the wireless communications device and the data communications network. One purpose of the invention is to create an arrangement that makes it possible to prevent a first data transmission connection from terminating during a second data transmission connection. The invention is based on the idea that while the first data transmission connection is active, the wireless communications device sends the terminal device a maintenance message maintaining the first data transmission connection before the wireless partial connection between the terminal device and the wireless communications device terminates.

According to a first aspect of the invention, there is implemented a method for maintaining a first data transmission connection from a terminal device to a telecommunications network, the first data transmission connection comprising a first partial connection between the terminal device and a wireless communications device and a second partial connection between the wireless communications device and the telecommunications network, in which method said second partial connection is suspended, characterised in that the first partial connection between the terminal device and the wireless communications device is set to idle mode, meaning that the connection is terminated on the physical layer but maintained on a higher layer.

According to a second aspect of the invention, there is implemented a wireless communications device comprising means for establishing a first partial connection within a first data transmission connection between a terminal device and the said wireless communications device, as well as means for establishing and terminating a second partial connection within a first data transmission connection between said wireless communications device and telecommunications network, characterised in that the wireless communications device also comprises means for setting the first partial connection between the terminal device and the wireless communications device to idle mode, where the connection is adapted to be terminated on the physical layer and maintained on a higher layer.

According to a third aspect of the invention, there is implemented a data transmission system comprising at least one telecommunications network, at least one wireless communications device and at least one terminal device, means for establishing a first partial connection within a first data transmission connection between a terminal device and said wireless communications device, as well as means for establishing and terminating a second partial connection within a first data transmission connection between said wireless communications device and telecommunications network, characterised in that the data transmission system also comprises means for setting the first partial connection between the terminal device and the wireless communications device to idle mode, where the connection is adapted to be terminated on the physical layer and maintained on a higher layer.

According to a fourth aspect of the invention, there is implemented a wireless communications device comprising a first transceiver for establishing a first partial connection within a first data transmission connection between a terminal device and said wireless communications device, as well as a second transceiver for establishing and terminating a second partial connection within a first data transmission connection between said wireless communications device and telecommunications network, characterised in that the wireless communications device also comprises a processor for setting the first partial connection between the terminal device and the wireless communications device to idle mode, where the connection is adapted to be terminated on the physical layer and maintained on a higher layer.

Significant benefits can be gained from the present invention. When applying the method according to the invention, termination of the packet-switched connection can be avoided, particularly in situations where a request to establish a circuit-switched connection arrives while a packet-switched data transmission connection is active over a wireless short-range link from the wireless communications device to the terminal device. The method according to the invention allows the circuit-switched connection to remain active for periods exceeding the relatively short timeout, and the probability of the packet-switched connection terminating is significantly lower compared to prior art solutions. The solution according to the invention does not require any special actions by the user when establishing a circuit-switched connection.

In the following, the invention will be described in detail by referring to the enclosed drawings, in which
Figure 1 shows a prior art method in an incoming call situation as a simplified signalling chart,
Figure 2 shows a method according to an embodiment of the invention in an incoming call situation as a simplified signalling chart,
Figure 3 shows a method according to an embodiment of the invention in an outgoing call situation as a simplified signalling chart,
Figure 4 shows a terminal device and wireless communications device according to an embodiment of the invention as a simplified block diagram,
Figure 5 shows the protocol layers associated with the management of the IR link in the terminal device according to an embodiment of the invention as a simplified block diagram,
Figure 6 shows a mobile communication system that the invention may be applied to.

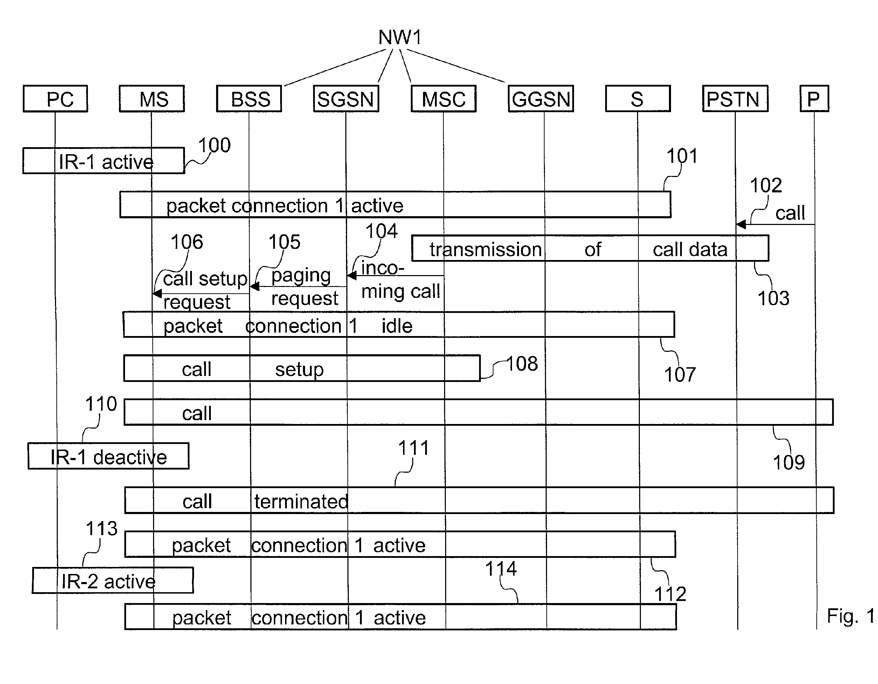

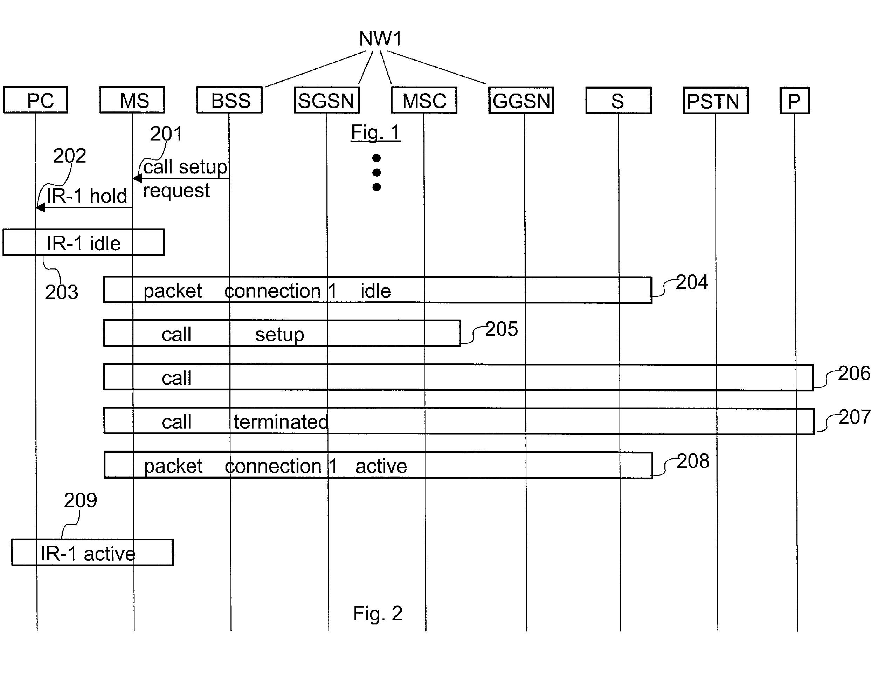

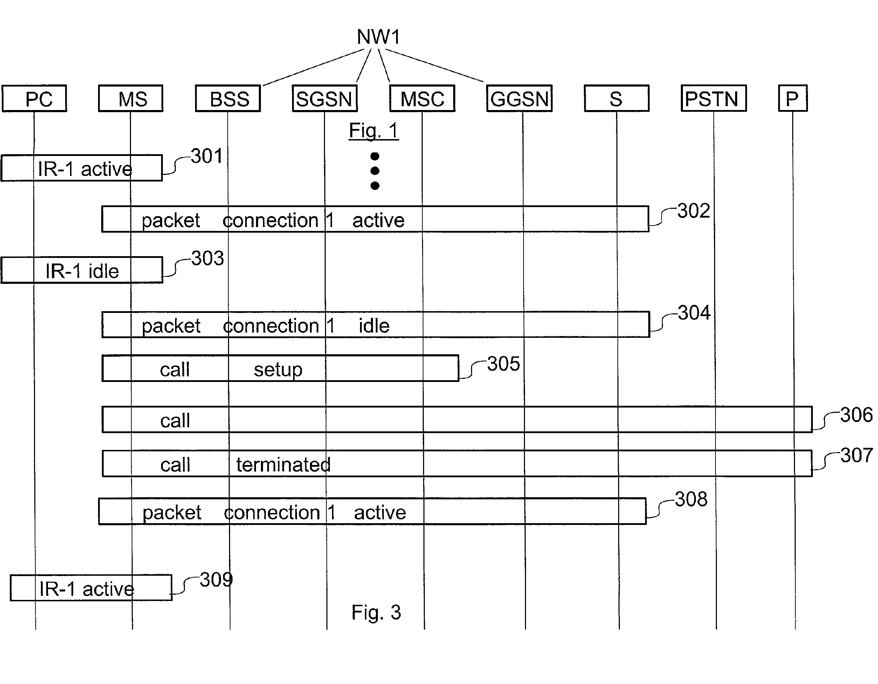

With reference to Figure 1, in a prior art method, the user activates an IR link in the wireless communications device MS. Typically, a certain set of link settings have been defined in the terminal device PC for using the wireless communications device as a fax modem. When the user places the wireless communications device in the immediate vicinity of the terminal device after activating the IR link, so that the IR ports of the devices face each other without obstructions, the terminal device detects the IR signal transmitted by the wireless communications device and identifies it. As such, automatic IR signal identification is known in terminal devices, particularly in laptop computers, and makes it faster to establish an IR link, because the user does not need to activate the link separately. Naturally, instead of automatic identification, the IR link may be activated separately from the terminal device before establishing a data transmission connection. Depending on the terminal device and operating system, the actual method of establishing a data transmission connection may vary, but typically, the terminal device contains a designated network connection application that the user uses to define the initialisation settings for the modem connection. In this case, these include, for example, setting the connection type between the wireless communications device and the terminal device to infrared and setting the modem connection number to a number supported by the mobile communication network, such as the number "^{*}99#" for the GPRS service. Once started, the network connection application starts to communicate over the IR link with the wireless communications device operating as a modem. A data transmission connection from the terminal device through the wireless communications device to a mobile communication network is established by sending a paging request to the wireless communications device. The wireless communications device activates the PDP context (Packet Data Protocol) in the GPRS network and establishes a connection to an internet through the GGSN element (Gateway GPRS Support Node). After this, the wireless communications device sends a connection acknowledgement to the terminal device, and applications residing in the terminal device can now use the connection for data transmission. Connection establishment as such is known from prior art, and it is not necessary to describe it in any more detail in this context.

Now, a packet-switched connection is activated in the wireless communications device, enabling information to be transmitted between the mobile communication system NW1 and wireless terminal MS as data packets using a method known from prior art. Block 101 in the signalling chart of Figure 1 illustrates this; data is transmitted over a packet-switched connection between the wireless communications device MS and the server S through the routing support node GGSN (Gateway GPRS Support Node). When a call is coming to the wireless communications device MS, for example from telephone P in the fixed telecommunications network PSTN (arrow 102), the telecommunications network PSTN transmits information about the call to the mobile switching centre MSC of the mobile communication network NW1, using a method known from prior art (block 103). The mobile switching centre MSC sends the serving support node SGSN (Serving GPRS Support Node) a message notifying it of an incoming call, represented by arrow 104 in Figure 1. The serving support node SGSN sends a paging request for a circuit-switched connection to the base station subsystem BSS that the wireless communications device MS is connected to at the moment (arrow 105). The home location register HLR or the visitor location register VLR known from prior art are used for determining the current position of the wireless communications device MS. The base station subsystem BSS sends a paging request for a circuit-switched connection from the base transceiver station BTS further to the wireless communications device MS (arrow 106), which receives and interprets the request. The wireless communications device MS detects that a circuit-switched call is coming and suspends the packet-switched connection for the duration of the circuit-switched call but does not terminate it completely. The wireless communications device sets the active PDP context to an inactive state for the duration of the circuit-switched call as specified for a Class B GPRS terminal (block 107). After the paging request (arrow 106), the wireless communications device and the network establish a circuit-switched call (block 108) before the actual circuit-switched call (block 109). When the packet-switched connection is suspended, the wireless communications device may also send a message notifying the server of the suspension (not shown in the Figure). The server can use this to temporarily rearrange its operations.

In accordance with the specifications defined by IrDA (Infrared Data Association), an active IR link between two devices can be suspended for a maximum of 40 seconds without terminating the IR link. This means that the devices forming an active IR link can be repositioned to a position where the IR ports of the devices are unable to intercommunicate without terminating the active IR link. If the devices are repositioned within the specified maximum time to a position where an unobstructed IR connection is possible again, the active IR link will not terminate. In a prior art arrangement, when a packet-switched connection is active and the user answers a circuit-switched call by lifting the wireless communications device from its position beside the terminal device to the using/talking position, the IR link between the wireless communications device and the terminal device is deactivated (block 110), but the previously established IR link remains active for a maximum of 40 seconds as specified above; the actual duration of this timeout depends on the terminal device's settings. After the maximum time has expired, the IR port of the terminal device terminates the IR link.

After the user has ended the circuit-switched call (block 111), he sets the wireless communications device beside the terminal device as described above, and the wireless communications device activates the suspended packet-switched connection, in this case the PDP context (block 112). The IR port of the terminal device detects the IR signal of the wireless communications device again, but as the IR link has previously terminated, the wireless communications device can no longer attach the active packet-switched connection in the wireless communications device to the previous IR link. Due to this, the only option is to re-establish the IR link (block 113) and activate a new packet-switched connection from the wireless communications device to the network (block 114). This not only delays the re-establishment of the packet-switched connection, but can also cause problems for the applications that were active at the time of connection termination as described above.

With reference to Figure 2, in a method according to an embodiment of the invention, a packet-switched connection is established between the devices, using an IR link as described above, up to the phase when the base station subsystem BSS sends a paging request for a circuit-switched connection from the base transceiver station BTS further to the wireless communications device MS (arrow 201). According to the invention, the wireless communications device MS now transmits a signalling message notifying of a circuit-switched call to the terminal device PC over the IR link (arrow 202) before activating a ringing tone at the wireless communications device MS to alert the user to a circuit-switched call. Upon receiving the signalling message, the terminal device PC knows that the packet-switched connection may be temporarily suspended as the wireless communications device MS sets it to an inactive state (Packet connection 1 idle). The wireless communications device MS sets the active PDP context to an inactive state for the duration of the circuit-switched call as specified for a Class B GPRS terminal (block 204). On the basis of the signalling message, the terminal device PC is able to set the IR link used by the network connection application to idle mode (block 203). Thus the IR link will not be terminated during the circuit-switched call, even though the physical IR connection between the devices terminates. The terminal device PC may send an acknowledgement message to the wireless communications device MS as a response to receiving the signalling message; upon receiving the acknowledgement, the mobile communications device alerts the user to an incoming call. According to an embodiment of the invention, the wireless communications device MS will alert the user of a circuit-switched call automatically after a certain period of time has expired, and at this time, the IR link is already in idle mode.

According to an optional embodiment of the invention, the wireless communications device MS sends a maintenance message in place of the signalling message (arrow 202) to set the IR link into idle mode (block 203). In this application text, a maintenance message refers to a command message that the wireless communications device may use to command the terminal device PC. On the other hand, a signalling message refers to a message that communicates information and that the terminal device PC may optionally use for performing certain functions.

The establishment of a circuit-switched call (block 205), the actual circuit-switched call (block 206) and the termination of the circuit-switched call (block 207) are similar to the situation in Figure 1 described above.

In the method according to the invention, after the user has ended the circuit-switched call, he sets the wireless communications device MS beside the terminal device PC as described above, and the wireless communications device MS activates the suspended packet-switched connection, in this case the PDP context (block 208). Now, the user can use the user interface of the terminal device PC to activate the IR port of the terminal device PC from idle mode back into active mode. As a consequence of this, the IR port of the terminal device PC detects the IR signal from the wireless communications device MS again and is able to attach the active packet-switched connection of the wireless communications device MS to the IR link switched from idle into active mode, because the identification of that link has been preserved in the terminal device for the duration of idle mode. Thanks to this, no new IR link is required between the devices, but the physical connection of the idle IR link only needs to be activated (block 209) and the packet-switched connection established through the wireless communications device MS before the circuit-switched call continues normally. The method according to the invention not only makes it faster to re-establish a packet-switched connection from the terminal device PC to the telecommunications network, but also makes it possible to avoid the login problems described above in most cases and improves the usability of the system.

According to an optional embodiment of the invention, the network connection application in the terminal device PC represents information indicating the IR link idle mode in a separate window or as a modem application icon on the screen of the terminal device PC on the basis of the signalling message received from the wireless communications device MS. The information window or icon may provide the user with the options of activating the IR link from idle into active mode, switching the IR link from active into idle mode, and terminating the IR link. The information window of the network connection application may also be clearly visible and available to the user for the entire duration of application activity, which is particularly preferable in the situation where the user activates a circuit-switched call as described later. Optionally, the window may be presented only as necessary, for example when the state of the data transmission connection changes.

In accordance with Figure 3, the method according to the invention is also applicable to the situation where the user wants to establish a circuit-switched call using the wireless communications device MS while a packet-switched connection is active. The packet-switched connection (block 302) is established using an IR link (block 301) between the devices as described above, up to the phase when the establishment of a circuit-switched connection is started. A packet-switched connection is activated in the wireless communications device MS, enabling information to be transmitted between the mobile communication system NW1 and wireless communications device MS as data packets using a method known from prior art. Block 302 in the signalling chart of Figure 3 illustrates this. The user initiates the establishment of a call by dialling a telephone number. Most suitably after the user has pressed the send button or the so-called handset up button, the wireless communications device MS sends an IR link maintenance message to the terminal device PC (block 303). This embodiment requires that the wireless communications device MS and the terminal device PC have an IR connection after dialling the telephone number. Typically this happens in a manner whereby the user dials the desired number while keeping the wireless communications device beside the terminal device without terminating the IR link. The wireless communications device sets the active PDP context to an inactive state for the duration of the circuit-switched call as specified for a Class B GPRS terminal (block 304). After dialling the number, the establishment of a circuit-switched call (block 305), the actual circuit-switched call (block 306) and the termination of the circuit-switched call (block 307) are similar to the situation in Figure 1 described above. A packet-switched connection (block 308) is established and an IR link (block 309) is activated similarly as described above in the embodiment according to Figure 2.

According to an embodiment of the invention, the user may also establish a circuit-switched call by using the information window or icon on the screen of the terminal device PC to select a network connection application function that sets the IR link into idle mode (block 303). After this, the user may lift the wireless communications device MS away from the immediate vicinity of the terminal device PC, dial the desired number and conduct the call without terminating the previously established IR link.

According to an embodiment of the invention, the user may use the information window on the screen of the terminal device PC to dial the telephone number of the circuit-switched connection. In the same connection, the network connection application sets the IR link into idle mode (block 303), and the user may lift the wireless communications device away from the immediate vicinity of the terminal device PC and conduct the call without terminating the previously established IR link.

Before establishing the circuit-switched call, the packet-switched connection is suspended (block 304) but not completely terminated for the duration of the circuit-switched call. The wireless communications device MS sets the active PDP context to an inactive state for the duration of the circuit-switched call, as specified for a Class B GPRS terminal.

In a method according to the invention, after the user has ended the circuit-switched call (block 307), he sets the wireless communications device MS beside the terminal device PC as described above, and the wireless communications device MS activates the suspended packet-switched connection (block 308), in this case the PDP context. The user can use the user interface of the terminal device PC to activate the IR port of the terminal device PC from idle mode back into active mode (block 309). As a consequence of this, the IR port of the terminal device PC detects the IR signal from the wireless communications device MS again and is able to attach the active packet-switched connection of the wireless communications device MS to the IR link switched from idle into active mode, because the identification of that link has been preserved in the terminal device PC for the duration of idle mode. Thanks to this, no new IR link is required between the devices, but the physical connection of the idle IR link only needs to be activated and the packet-switched connection established through the wireless communications device MS before the circuit-switched call continues normally.

According to an embodiment of the invention, the presentation of the network connection application information window described above may be automated so that the window with the options for changing the state of the IR link will appear immediately after the IR link between the terminal device PC and the wireless communications device MS has disappeared. According to this embodiment, the user may set the IR link into idle mode within the maximum IR timeout specified by IrDA (Infrared Data Association) before the link is terminated. The solution works both when answering a circuit-switched call and establishing a circuit-switched call, and the user is able to decide whether to keep the IR link immediately after the IR link has disappeared.

It is obvious that the principles described above may also be applied to a situation where the call is not answered. In this case, the call attempt fails and the packet-switched connection may be activated once the caller has given up the call attempt by replacing the handset or pressing the handset down button, for example. The block diagrams of Figures 2 and 3 may be applied to a large extent in this situation as well, with the exception of the call blocks 206 and 306. In this embodiment, the call may be cancelled either using the wireless communications device MS or the network connection application in the terminal device PC.

Several packet-switched connections or PDP contexts may be established between the wireless communications device MS and the telecommunications network NW1. A different Quality of Service (QoS) may be defined for each connection, and the resources between the wireless communications device MS and the telecommunications network NW1 may not be sufficient for using all the packet-switched connections simultaneously. The quality parameters used for these packet-switched connections may include the bit rate, error rate or delay, for example. A possible environment for implementing the invention is an lPv6 (Internet Protocol version 6) based system that allows the definition of a primary PDP context and one or more secondary PDP contexts with a different Quality of Service, for example. A typical situation is a video call where the video and audio call data is transmitted through the primary PDP context and the texts are transmitted through a secondary PDP context. Another exemplary implementation is one where only the video is transmitted through the primary PDP context, and the audio and texts are transmitted through a secondary PDP context.

In an embodiment of the invention, the packet-switched connection between the wireless communications device MS and the telecommunications network NW1 is suspended in order to use at least one simultaneously active packet-switched connection despite the limited resources of the telecommunications network NW1. The telecommunications network NW1 transmits information on the change of resources to the wireless communications device MS, and as a response, the wireless communications device MS sends the terminal device PC a maintenance message setting the first partial connection to idle mode, or provides information on the change of the state of the telecommunications network NW1 to the terminal device PC, which sets the first partial connection to idle mode.

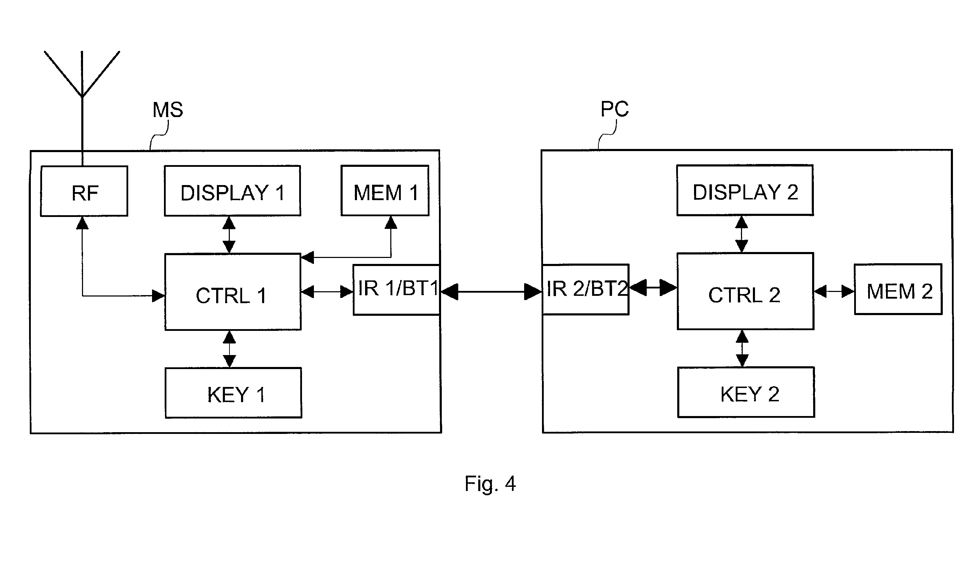

With reference to Figure 4, a wireless communications device MS and a terminal device PC according to an embodiment of the invention are illustrated as a simplified block diagram. The figure illustrates a number of functional blocks required for describing the invention. The wireless communications device MS contains a processor block CTRL1 that may be implemented by means of one or more processors, such as a microprocessor, digital signal processor etc., as known from prior art. The processor block CTRL1 may also be a part of an ASIC (Application Specific Integrated Circuit) that is also used for implementing other functions of the wireless communications device MS. The wireless communications device MS contains memory MEM1 for storing information; this may be read only memory, read/write memory and/or non-volatile rewritable memory, for example. The radio frequency section RF comprises the required means for implementing radio frequency data transmission to the base transceiver station BTS. In addition, the wireless communications device MS contains, for example, a keypad KEy1, a display DISPLAY1 and an infrared port lR1. The terminal device PC also contains a processor block CTRL2 that may be implemented by means of one or more processors, such as a microprocessor, digital signal processor etc., as known from prior art. The processor block CTRL2 may also be a part of an ASIC (Application Specific Integrated Circuit) that is also used for implementing other functions of the terminal device PC. The terminal device PC also contains memory MEM2, a keypad KEY2, a display DISPLAY2 and an infrared lR2 for functions corresponding to those of the blocks of the wireless communications device MS described above. The IR ports are used for arranging a data transmission connection between the wireless communications device MS and the terminal device PC. In practical applications, this data transmission connection may be any type of wireless link, such as an infrared link or a short-range radio frequency link. Figure 4 described above is also applicable to the illustration of a short-range radio frequency link between a terminal device and a wireless communications device, with the difference that the lR1 and lR2 blocks are replaced by Bluetooth RF blocks BT1 and BT2. The wireless communications device MS includes means for establishing both a circuit-switched connection (CS) and a packet-switched connection to the mobile communication system NW1.

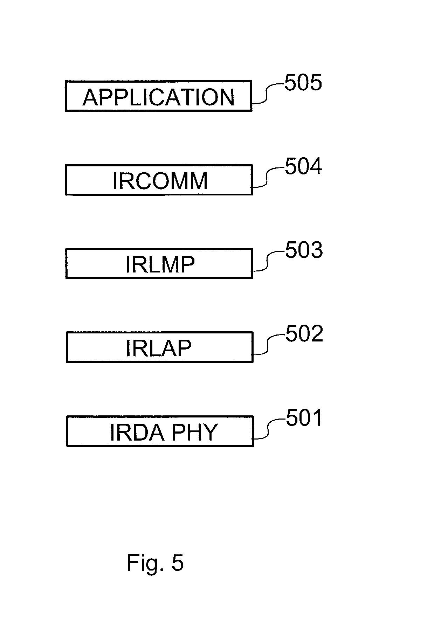

With reference to Figure 5, the following is a description of the various protocol layers 501 to 505 of an infrared-based data transmission connection defined by IrDA. The three lowest protocol layers, that is, the IrDA Physical Layer 501, the Infrared Link Access Protocol (IrLAP) 502 and the Infrared Link Management Protocol (IrLMP) 503 are required; in addition to these, IrDA has also defined a set of optional protocols for various applications, one of which is IrCOMM (IrDA Serial and Parallel Port Emulation) 504. The physical protocol layer 501 comprises the specifications for IrDA transceivers, including data transmission rates, wavelength, pulse shape and sensitivity. IrLAP 502 specifies the link layer functions, including automatic search for other IrDA devices (sniffing), automatic identification of other IrDA devices (discovery), resolution of any address conflicts, establishment of a new connection, data transmission and termination of a connection. During data transmission, IrLAP 502 provides reliable error correction, any packet retransmissions and flow control. A typical IrDA link comprises one primary device and one or more secondary devices whose data transmission roles are specified by IrLAP 502. The primary device initiates the establishment of a connection either by automatic detection (sniffing) or by the action of the primary device user and, upon identification, transmits connection establishment information to the secondary device, typically using an initial data rate of 9600 bps. Said information includes, among other things, the address and data rate used by the primary device. The secondary device responds to the primary device by sending its own address and other required parameters, such as the data rate. After exchanging connection establishment information, the data rate and other link-level parameters are changed to the desired values, and the primary device verifies said parameters from the secondary device by means of a verification message. After this, the devices have a mutual data transmission connection while the primary device controls the link layer. IrLMP 503 specifies functions between the communicating parties after a connection has been established, such as the negotiation and control of link-level parameters and the registration of the characteristics of the communicating parties (discovery). The registration happens when the IrDA devices communicate with each other for the first time. IrLMP 503 registers every service and protocol. IrLMP 503 also enables the data transmission of several applications to be multiplexed into one connection established by IrLAP 502. These functions are particularly useful in a situation where the user wants to use or synchronize information in different applications between a terminal device and a wireless communications device or a PDA (Personal Digital Assistant). An IrLMP multiplexer (LM-MUX) enables the multiplexing of different data transmission streams on top of the IrLAP 502 described above. The LM-MUX can operate in two modes, multiplexing mode and exclusive mode. In multiplexing mode, several Link Service Access Points (LSAP) may access the IrLAP layer 502 underlying IrLMP 503 and a common IR link, while in exclusive mode, only one LSAP can be active in an IrLAP connection. IrLMP 503 also includes the LM-IAS (IrLMP Information Access Service) function, intended to maintain a database of the connection possibilities of a communicating party and enable a connection to the other party's corresponding database. Thus said lAS database holds the application components of the communicating party that are accessible over IrDA, as well as the parameters essential to connection establishment; another communicating party can fetch the parameters and access the application over IrDA. IrCOMM 504 specifies the serial and parallel port emulation functions of the device over the IrLMP 503 and IrLAP 502 protocol layers. The use of IrCOMM 504 is based on the fact that many applications in the device typically use those ports (so-called serial ports) as their interfaces to external devices, and the adaptation of IrDA to these ports enables the applications operating in the device to be unaware of the actual transmission path behind the interface, as IrDA is adapted to be a standard interface for the applications in the device. In a terminal device PC or wireless communications device MS, the protocol layers 501 to 505 are typically implemented in the blocks CTRL1-2, MEM1-2 and IR1-2 according to Figure 4.

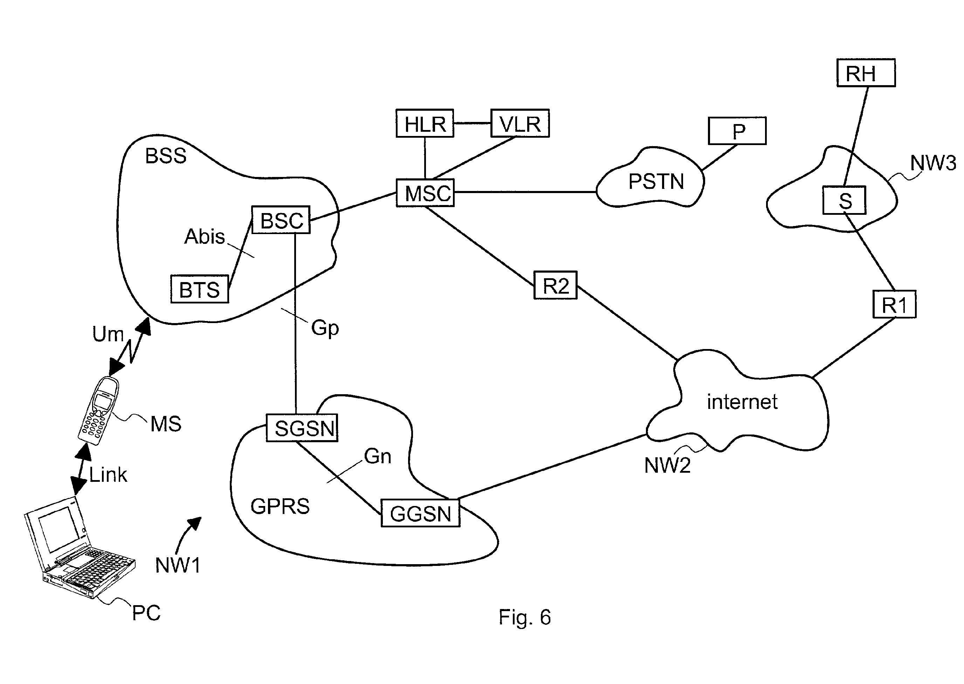

With reference to Figure 6, a mobile communication system NW1 that the invention may be applied to is illustrated as a simplified block diagram. This mobile communication system NW1 comprises the properties of the GSM mobile communication system and the GPRS system, but it is obvious that the invention is also applicable to other mobile communication systems providing both a packet-switched connection and a circuit-switched connection. Figure 6 shows the central operation blocks of the mobile communication system NW1. The packet transmission controller SGSN (Serving GPRS Support Node) controls the operation of the packet transmission in the cellular network side. The packet transmission controller SGSN is responsible for logging the wireless communications device MS in and out, updating the position of the wireless communications device MS and routing data packets to the correct addresses. The wireless communications device MS is attached to the base station subsystem BSS through the radio interface Um. The base station subsystem is attached to the packet transmission SGSN through the BSS-SGSN interface Gp. Within the base station subsystem BSS, the base transceiver station BTS and the base station controller BSC are attached to each other by means of the BTS-BSC interface Abis. The packet transmission controllers SGSN may communicate with other packet transmission controllers SGSN by means of GGSN (Gateway GPRS Support Node).

The wireless communications devices MS communicate with the base transceiver stations BTS through the air interface (radio interface) Um. The base transceiver stations are controlled by base station controllers BSC, which have a data transmission connection with the mobile switching centre MSC. The base station controller BSC and associated base transceiver stations BTS are also referred to as the base station subsystem BSS. The interface between the mobile switching centre MSC and the base station subsystem BSS used in a circuit-switched connection is called the A interface. Correspondingly, the interface between the base station controller BSC and the base transceiver station BTS is called the Abis interface. Among other things, the mobile switching centre MSC is responsible for the routing of incoming and outgoing calls similarly to a switching centre in the public switched telephone network PSTN (not shown). In addition, the mobile switching centre MSC is responsible for functions required in mobile phone traffic, such as managing the position of a mobile station by means of the home location register HLR and the visitor location register VLR. The mobile switching centre MSC can also be used for establishing a circuit-switched connection to the Internet NW2 through one or more routers R2.

According to an embodiment of the invention, the active IR link in the terminal device PC can be set to idle mode using the LM_idle function in accordance with IrLMP. The function can be used for setting the state of the LSAP mentioned above from active to idle mode, and the IrLAP connection can be terminated without terminating the complete link. This embodiment avoids re-establishment of the connection; the party identifiers and connection parameters of the communicating parties are preserved in the LM-IAS databases and need not be fetched again when switching back into active mode. In the embodiment according to the invention, the LM_idle function may be activated either from the terminal device PC or the wireless communications device MS. The idle mode may be activated from the terminal device PC entirely under software control, for example in a network connection application of the terminal device PC that generates a LM_idle command and sets the IR link of the terminal device PC into idle mode during an active packet-switched connection if a circuit-switched connection needs to be received or initiated. Idle mode may be activated from the wireless communications device MS by transmitting an IR link maintenance message including an LM_idle command from the wireless communications device MS to the terminal device PC. Similarly, the terminal device PC may send an IR link maintenance message to the wireless communications device MS, or an application in the wireless communications device MS may generate an LM_idle command and set the IR link of the wireless communications device MS to idle mode.

According to an embodiment of the invention, the connection between the terminal device PC and the wireless communications device MS may also be implemented using a short-range BT (Bluetooth) radio frequency link. A short-range radio frequency link is different from an IR link in the aspect that a similar unobstructed link between the communicating parties is not required. Two main modes are defined for a BT link: STANDBY and CONNECTION. In STANDBY mode, the BT device is in power-saving mode, and there is no active connection over the BT link. In CONNECTION mode, the BT link is active, and data packets may be transmitted over the link. The CONNECTION mode includes a number of different operating modes, such as Active Mode, Sniff Mode, Hold Mode and Park Mode.

In Active Mode, the BT device participates normally in data transmission over the BT link, in Sniff Mode the activity of the BT device is limited by reducing the time slots allocated to it, in Hold Mode the BT device does not participate in the transmission of data packets but concentrates on the transmission of signalling data or switches into power-saving mode while retaining its active data transmission identifier (AM_ADDR), and in Park Mode, the device switches into power-saving mode and gives up its active data transmission identifier (AM_ADDR).

In the problem situation that is the object of the invention, the active BT link of the terminal device PC can be set to idle mode using the Hold Mode described above. The function can be used for setting the state of the BT device from active into idle mode, and the BT connection can be terminated without terminating the complete link. This embodiment avoids re-establishment of the connection; the party identifiers and connection parameters of the communicating parties are preserved and need not be regenerated when switching back into active mode. In the embodiment according to the invention, the BT Hold Mode used as the idle mode may be activated either from the terminal device PC or the wireless communications device MS. Idle mode may be activated from the terminal device PC entirely under software control in a network connection application of the terminal device PC that sets the BT link of the terminal device PC into idle mode during an active packet-switched connection if a circuit-switched connection needs to be received or initiated. Switching from idle mode back into active mode can be implemented using a timeout counter in accordance with the BT specifications. Before entering idle mode, the BT devices negotiate a period of time that a device entering idle mode will remain in idle mode before switching back to active mode.

In the arrangement according to the invention, the period can be determined by means of an information window presented to the user on the screen of the terminal device PC. Idle mode may also be implemented automatically so that the terminal device PC sets the BT link to idle mode without user action.

Figure 4 described above is also applicable to the illustration of a terminal device PC and a wireless communications device MS, with the difference that the lR1 and lR2 blocks are replaced by Bluetooth RF blocks BT1 and BT2. In a Bluetooth embodiment, idle mode in a terminal device PC and wireless communications device MS is typically implemented in the blocks CTRL1-2, MEM1-2 and BT1-2 according to Figure 4.

The present invention has several advantages in comparison with prior art implementations. For example, the invention is applicable to a connection between a mobile phone operating as the wireless communications device MS in relation to a telecommunications network and another mobile phone, PDA, small laptop computer, hifi equipment or similar operating as the terminal device PC. Besides a mobile phone, the wireless communications device MS may be any other device or combination of devices with a radio frequency connection to a telecommunications network, such as a laptop computer equipped with a RF card for connection to a telecommunications network.

This paper presents the implementation and embodiments of the present invention with the help of examples. It will be appreciated by the skilled person that various modifications may be made to the embodiments described above without departing from the scope of the present invention. The embodiments presented should be considered illustrative, but not restricting. Thus, the possibilities of implementing and using the invention are only restricted by the enclosed claims. Consequently, the various options of realising the invention as determined by the claims, including the equivalent realisations, also belong to the scope of the invention.

## Claims

1. A method for maintaining a first data transmission connection from a terminal device (PC) to a telecommunications network (NW1), the first data transmission connection comprising a first partial connection between the terminal device (PC) and a wireless communications device (MS) and a second partial connection between the wireless communications device (MS) and the telecommunications network (NW1), in which method said second partial connection is suspended,
**characterised in that**
the first partial connection between the terminal device (PC) and the wireless communications device (MS) is set to idle mode, meaning that the connection is terminated on the physical layer but maintained on a higher layer.

2. A method according to claim 1,
**characterised in that**
at least a second data transmission connection between said wireless communications device (MS) and a telecommunications network (NW1) is established while said first partial connection is in idle mode.

3. A method according to claim 1,
**characterised in that**
the wireless communications device (MS) receives a paging request for establishing another data transmission connection and notifies the terminal device (PC) of the request and, in response to the notification, the terminal device (PC) sets the first partial connection to idle mode.

4. A method according to claim 1,
**characterised in that**
the wireless communications device (MS) receives a paging request for establishing another data transmission connection and, in response to the request, sets the first partial connection to idle mode by transmitting a maintenance message from the wireless communications device (MS) to the terminal device (PC).

5. A method according to claim 1,
**characterised in that**
the first partial connection is set to idle mode in response to actions taken by the terminal device (PC) user.

6. A method according to claim 1,
**characterised in that**
the wireless communications device (MS) receives information about the changed state of the telecommunications network (NW1), and in response to this, the first partial connection is set to idle mode.

7. A method according to any of the claims 1 to 6,
**characterised in that**
said second partial connection within the first data transmission connection is established as a packet-switched connection, and said second data transmission connection is established as a circuit-switched connection.

8. A method according to any of the claims 1 to 6,
**characterised in that**
said first partial connection within the first data transmission connection is established as an infrared link.

9. A method according to any of the claims 1 to 6,
**characterised in that**
said first partial connection within the first data transmission connection is established as a short-range radio frequency link.

10. A wireless communications device (MS) comprising
means (lR1, BT1, CTRL1) for establishing a first partial connection within a first data transmission connection between a terminal device (PC) and said wireless communications device (MS),
means (RF, CTRL1) for establishing and terminating a second partial connection within a first data transmission connection between said wireless communications device (MS) and a telecommunications network (NW1),
**characterised in that**
the wireless communications device (MS) also includes means (CTRL1, lR1, BT1) for setting the first partial connection between the terminal device (PC) and the wireless communications device (MS) into idle mode, where the connection is adapted to be terminated on the physical layer and maintained on a higher layer.

11. A wireless communications device (MS) according to claim 10,
**characterised in that**
the wireless communications device (MS) comprises means (RF, CTRL1) for establishing at least a second data transmission connection between said terminal device (MS) and a telecommunications network (NW1) while said first partial connection is in idle mode.

12. A data transmission system comprising at least one telecommunications network (NW1), at least one wireless communications device (MS) and at least one terminal device (PC), means (lR1, BT1, CTRL1) for establishing a first partial connection within a first data transmission connection between the terminal device (PC) and said wireless communications device (MS),
means (RF, CTRL1) for establishing and terminating a second partial connection within a first data transmission connection between said wireless communications device (MS) and a telecommunications network (NW1),
**characterised in that**
the data transmission system also includes means (CTRL1, lR1, BT1) for setting the first partial connection between the terminal device (PC) and the wireless communications device (MS) to idle mode, where the connection is adapted to be terminated on the physical layer and maintained on a higher layer.

13. A wireless communications device (MS) comprising
a first transceiver (IR1, BT1, CTRL1) for establishing a first partial connection within a first data transmission connection between a terminal device (PC) and said wireless communications device (MS),
a second transceiver (RF, CTRL1) for establishing and terminating a second partial connection within a first data transmission connection between said wireless communications device (MS) and a telecommunications network (NW1),
**characterised in that**
the wireless communications device (MS) also includes a processor (CTRL1, IR1, BT1) for setting the first partial connection between the terminal device (PC) and the wireless communications device (MS) to idle mode, where the connection is adapted to be terminated on the physical layer and maintained on a higher layer.
